Europäisches Patentamt

European Patent Office

Office européen des brevets

(19)

(11) **EP 1 214 205 B1**

(12) # EUROPEAN PATENT SPECIFICATION

(45) Date of publication and mention
of the grant of the patent:
**17.03.2004 Bulletin 2004/12**

(51) Int Cl.⁷: **B60C 19/00**

(86) International application number:
**PCT/EP2000/008942**

(21) Application number: **00965992.1**

(22) Date of filing: **13.09.2000**

(87) International publication number:
**WO 2001/021420 (29.03.2001 Gazette 2001/13)**

(54) **METHOD AND DEADENING DEVICE FOR REDUCING THE NOISE IN A VEHICLE DURING TRAVEL, AND TYRE WHEEL PROVIDED WITH SAID DEVICE**

VERFAHREN UND DÄMPFUNGSVORRICHTUNG ZUR REDUZIERUNG DES FAHRZEUGROLLGERÄUSCHES,UND REIFEN MIT DERSELBEN VORRICHTUNG

PROCEDE ET DISPOSITIF DE REMPLISSAGE POUR L'AMORTISSEMENT DES BRUITS A L'INTERIEUR D'UN VEHICULE EN MARCHE, ET ROUES EQUIPEES DE PNEUS FOURNIES AVEC LEDIT DISPOSITIF

(84) Designated Contracting States:
**DE FR GB IT**

(30) Priority: **21.09.1999 EP 99830593**
**03.11.1999 US 163242 P**

(43) Date of publication of application:
**19.06.2002 Bulletin 2002/25**

(73) Proprietor: **PIRELLI PNEUMATICI Società per Azioni**
**20126 Milano (IT)**

(72) Inventors:
• **DEVIZZI, Andrea**
**I-20037 Paderno Dugnano (IT)**
• **MANCOSU, Federico**
**I-20135 Milano (IT)**

• **MATRASCIA, Giuseppe**
**I-20038 Seregno (IT)**

(74) Representative: **Giannesi, Pier Giovanni**
**Pirelli S.p.A.**
**Direzione Proprietà Industriale**
**Viale Sarca, 222**
**20126 Milano (IT)**

(56) References cited:
DE-A- 4 325 470          US-A- 2 290 121
US-A- 4 003 419          US-A- 4 399 851
US-A- 5 894 874

• PATENT ABSTRACTS OF JAPAN vol. 1997, no. 07, 31 July 1997 (1997-07-31) & JP 09 086114 A (TOKAI RUBBER IND LTD), 31 March 1997 (1997-03-31)

## Description

The present invention relates to a method and a device for reducing the noise produced by the rolling of a tyre on the ground and the transmission of said noise inside and outside a vehicle. The present invention also relates to a tyre wheel provided with this device.

A conventional radial tyre principally comprises a toroidally shaped carcass comprising a carcass ply strengthened with reinforcing cords laying in radial planes, said carcass having its ends fixed to two metal annular cores, usually known as bead wires, forming the reinforcement of the 'beads, in other words of the radially inner ends of said tyre, said beads having the function of enabling the tyre to be fitted to its corresponding mounting rim.

A thin layer of airtight rubber, known as "liner", is usually placed on the inner surface of the carcass.

A thick strip of elastomeric material, i.e. the tread band, within which is formed a relief pattern comprising circumferential and/or transverse grooves variously arranged according to different configurations to form a suitable tread pattern, is placed on the crown of said carcass.

An annular reinforcing structure, usually known as belt structure, comprising a plurality of rubber strips incorporating reinforcing cords variously arranged with respect to the circumferential direction of the tyre, is located between the carcass and the tread band.

Following their assembly, the inner surface of the tyre and the rim form an annular cavity suitable to be inflated with a pressurized fluid in order to support the load bearing on the tyre.

The tyre mounted on its rim forms the tyre wheel, which in turn is designed to be fitted on the hub of a vehicle.

As is known, the rolling of a tyre on the road generates a multiplicity of noises which are perceived by the driver and/or by the passengers of the vehicle, inside the passenger compartment. Some of these noises are generated by the vibrations transmitted by the tyre to the passenger compartment of the vehicle through the tyre structure, the rim and the vehicle suspension system.

To enable the problem to be understood more clearly, reference will hereafter be made to the behaviour of an air-filled tube.

It is known that an air-filled tube has intrinsic resonance frequencies, here and hereafter indicated as "cavity frequencies", at which there are large oscillations of the air volume which give rise to areas of low and high pressure within the cavity.

It is also known that these frequencies are determined in mathematical terms by the ratio between the speed of sound and the length of the tube multiplied by a number i (= 1, 2, 3, ...) which indicates that the cavity frequencies are multiples of the fundamental frequency (in other words, of the frequency found by making i = 1).

A tyre mounted on a rim can be considered as an air-filled tube closed on itself in a toroidal configuration, and the first intrinsic cavity frequency (i.e. the fundamental frequency) depends on the mean length of the circumferential extension of the tyre.

The cavity frequencies of a tyre can be excited either by irregularities in the road or by nonuniformities of the tyre itself, such as the variation of thickness of the semi-manufactured products in the circumferential direction as well as the presence of joints between said semi-manufactured products, or by the pitch sequence of the tread pattern.

In particular, the tread band and the belt pack cyclically engaged in the footprint area, at points where the aforesaid irregularities are present, start to vibrate, thus causing oscillations to be transmitted inside the annular cavity formed between the rim and the tyre.

The phenomenon generates acoustic waves and amplification effects.

When the frequency of the oscillations transmitted inside the annular cavity during the rolling of the tyre coincides with a cavity frequency, the aforesaid amplification effects appear, these being due to resonance conditions which give rise to maximum amplitudes of oscillation of the air volume.

The acoustic waves are converted to mechanical vibrations within the tyre structure and the inner (metallic) part of the rim; deformations of the tyre appear in the areas of high air pressure (antinodes of the acoustic waves).

The resultant of these deformations appears as a force applied to the hub of the wheel which is transmitted into the passenger compartment of the vehicle and is manifested to the passengers as a troublesome noise level.

In practice, in conditions of resonance, the vibrations can be transmitted through the suspensions into the vehicle (passenger compartment), thus causing a troublesome acoustic disturbance which is perceived by the driver and any passenger.

For the purpose of opposing the propagation of the acoustic waves within the cavity of a rolling wheel, it is known from German patent application DE-2,040,898 that a deadening coating can be positioned on all or part of the inner surface of the tyre. This coating can be made from rubber or a foam of synthetic material, or from textile fibres, and is applied to the tyre by vulcanizing, by the use of adhesive, or by painting. The coating facing the cavity comprises an open-cell material to withstand the inflation pressure without undergoing flattening and to absorb the acoustic waves without reflecting them.

German patent application DE-3,042,350 criticizes this solution considering it to be of low efficiency since it provides a thickness of only 5 millimetres of the deadening coating. According to the aforesaid patent application, the solution to the problem consists again in applying to the inner surface of a tyre a layer of open-cell foam material, particularly a vulcanized polyurethane, with a thickness of at least 15 mm, which, as described in some examples, may be as much as 30 mm, and it further consists in the particular selection of certain features of the material, such as the dynamic modulus, the specific weight and its surface roughness. The parameters are selected in such a way as to obtain a satisfactory result for the whole of a temperature range from -20°C to +80°C.

.Said patent application also asserts that the foam coating must be firmly glued to the surface of .the tyre, since an insufficiently strong fitting would not enable the desired deadening features to be obtained.

European Patent application EP-911,185 recognizes that the layers of deadening material, such as those mentioned above, in the conditions of high-speed travel of a tyre, are subjected to high centrifugal stresses which give rise to deformations of the deadening material, thus generating, in turn, undesired alterations of the deadening features.

The solution proposed by EP-911,185 consists in applying a deadening open-cell material, covered by a mechanically resistent fabric, to the. rim surface facing the annular cavity formed between the tyre and the rim.

DE 43 25 470, corresponding to the preamble of claims 1 and 6, relates to a noise reducing design for vehicle wheels fitted with tyres. More particularly it discloses a hollow space formed by a tyre and a wheel rim, said apace being filled with a granular non-deformable and temperature-stable filler. The filler dampens the resonance characteristics of the hollow space and thereby substantially reduces the noise emitted by the vehicle. US 4,003,419 discloses a tyre having its tyre cavity filled with inexpensive lubrificated light cellular particles. This tyre thereby avoids deformation and flattening of the tyre upon loss of inflation pressure, while maintainig vehicular control .

The Applicant has perceived that the problem of the low efficiency and of the progressive deterioration of the deadening material placed on the inner surface of the tyre depended to a large extent on the fact that this material was firmly fixed to said inner surface.

The Applicant has found, by contrast with the prior art, that the problem of cancelling or in any way reducing the noise due to the presence of an annular cavity between the tyre and its mounting rim can be solved, in the first place, by avoiding any modification of the structure of the tyre and/or of the rim, and by using a device which does not necessitate the use of chemical and/or mechanical bonds between the device and the walls delimiting the aforesaid annular cavity.

The device according to the invention comprises a plurality of elements, independent from each other, and made from an expanded material, preferably with open cells, or from mineral or textile fibre, to be introduced between the rim and the tyre, preferably during the stage of fitting the tyre on said rim. When the tyre rolls, said elements are pushed by the centrifugal force towards the inner surface of the tyre, thus generating a ragged surface, facing the rim surface, and, according to their sizes, their number, the tyre speed and the impacts which are undergone, for example during the passage through the footprint area, can undergo displacements with respect to each other, making this surface continually variable during the rolling of the tyre.

Preferably, the material used to make said elements is selected from the group comprising open-cell polymers, or mineral and/or textile fibres.

If the used material is an open-cell polymeric material, then preferably a polymeric material having a modulus of compression in the range from 0.1 to 0.9 N/$mm^2$ and a resistance to tensile stress in the range from 0.2 to 1.1 N/$mm^2$ is used in order to avoid the known thermal and mechanical deteriorations of deadening materials. Additionally, said material is preferably selected in such a way as to have an elastic impact resistance (defined, as is known, by the percentage value of the amplitude of rebound, measured by systems and methods which are well known in the art) in the range from 20% to 50%.

Said elements, made from open-cell expanded material or from mineral and/or textile fibres, can be present in a predetermined number and can have geometrical shapes and dimensions predetermined in such a way that, in the presence of a given centrifugal force, they move towards the inner surface of the tyre in such a way as to form a deadening layer having said advantageously irregular (ragged) surface, capable of refracting and/or deflecting the acoustic waves, as well as of damping them. In the case of open-cell expanded material, said geometrical shapes and dimensions should be such as to provide a sufficient number of open, or at least partially open, cells, capable of imparting the desired deadening features to said material.

According to the invention, the use of said elements also makes it possible to verify the functionality of the deadening device over a period of time, replacing them, if necessary, simply by extracting the elements which are no longer effective from the wheel and introducing new or additional elements into the space between the tyre and the rim, for example during conventional maintenance operations on the vehicle.

In a first aspect, the invention relates to a tyre wheel for vehicles, according to independent claim 1.

In a further aspect, the present invention relates to a deadening device for vehicle wheels according to independent claim 6.

The deadening device according to the present invention is introduced into the tyre during its mounting on the corresponding rim; said elements of which it consists are freely movable within the aforesaid cavity in the absence of restraints either to the tyre or to the rim, forming a ragged surface when they are pushed towards the inner surface of the tyre by the effect of the centrifugal force.

Under the effect of said centrifugal force and/or of the movements of the wheel with respect to the ground (jolts, braking, acceleration, etc.), these elements, or at least some of them, can change their position with respect to each other, so that the configuration of said ragged surface is continuously varied during the movement of the wheel.

Advantageously, the aforesaid ragged surface, in combination with the open cells, where open-cell expanded elements are used, produces a structure inside the tyre, interposed between the surface of the tyre and the surface of the rim which, by the effect of its shape and/or its mobility, avoids the formation of stationary waves and damps the acoustic waves generated within the tyre.

Preferably, the volume occupied by said elements is not less than 1% of the volume of the annular cavity formed between the rim and the tyre. More preferably, the volume of annular cavity occupied by said elements is in the range from 1% to 90%.

Conveniently, the device according to the invention reduces the amplitudes of the resultant forces and accelerations at the hub and the noise level perceived in the passenger compartment at the aforesaid cavity frequencies.

Preferably, each body has a real density in the range from 0.01 to 0.1 g/cm$^3$.

Preferably, a number of elements in the range from 100 to 3000 is used.

In yet another different aspect, the invention relates to a motor vehicle comprising at least one tyre wheel as defined above.

Further features and advantages of the present invention will now be more clearly understood with the aid of the following description and of the attached figure, provided solely by way of example and without any restrictive intent, of which

Fig. 1      shows in cross section the generic structure of a tyre within which the elements of the device according to the invention are placed, in the version comprising spheroidal shapes;

Fig. 2      shows a position assumed by the elements according to the invention, in the embodiment comprising prismatic shapes, when the tyre associated with the corresponding rim is subjected to centrifugal force;

Figs. 3a, 3b      represent two different preferred embodiments of the elements according to the invention, of the prismatic type;

Fig. 4      shows in a diagram the result of a comparison between the resultant forces at the hub of the wheel with a tyre provided with the device according to the invention and those present with the same tyre without this device;

Fig. 5      shows in a diagram the result of a comparison between the noise levels within the passenger compartment of a vehicle fitted with a tyre provided with the device according to the invention and those present in the same vehicle without this device.

The invention is described with reference to a tyre with a radial carcass of the tubeless type, i.e. for use without an inner tube, but the invention is not limited to this type of tyre since it also produces its advantageous effects with any other type of tyre.

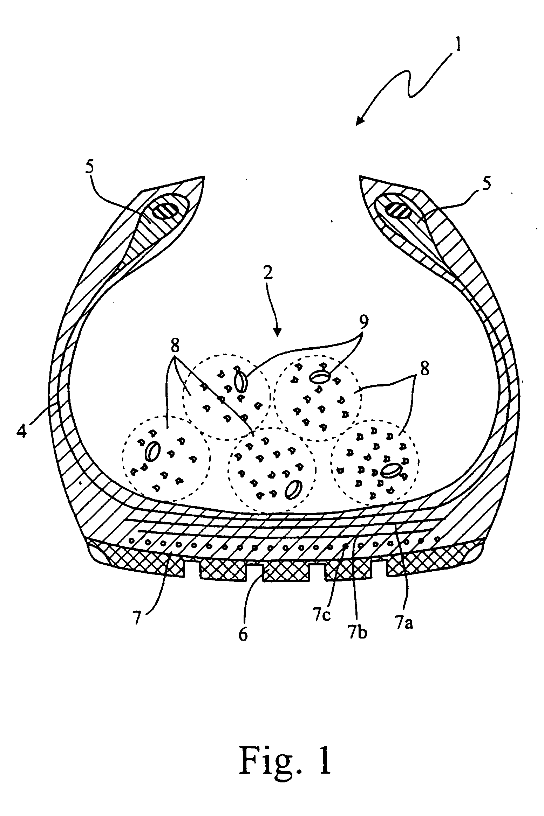

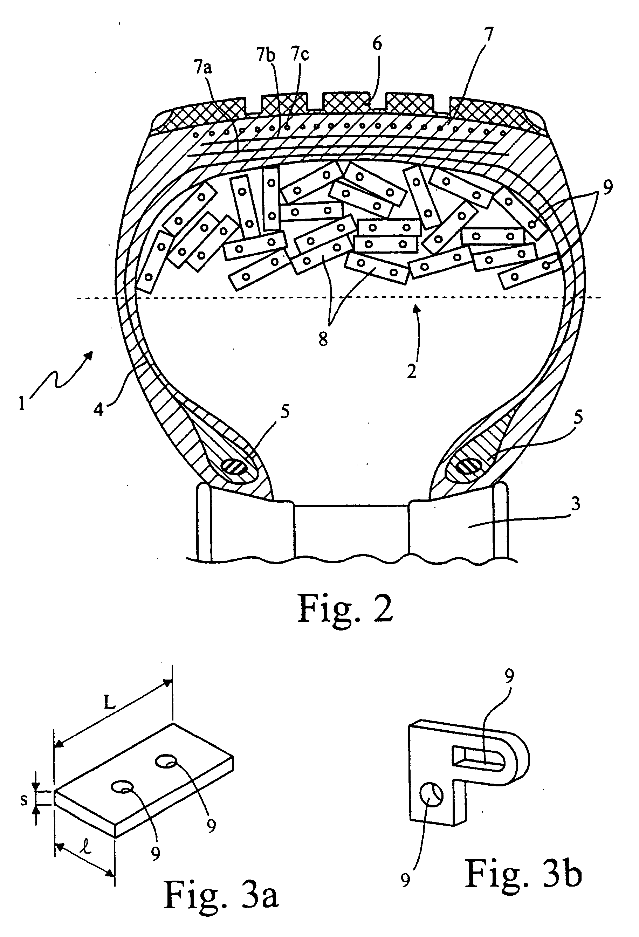

In Figure 1, reference sign 1 indicates a conventional tyre within which a deadening device 2 according to the invention, designed to reduce the internal noise of a vehicle, is housed. Device 2 is preferably introduced into the toroidal cavity during the fitting of the tyre to rim 3 (Figure 2). Tyre 1 comprises, in a conventional way, a carcass, toroidally shaped in the form of a ring, comprising at least one reinforcing ply 4 which has its ends fixed to two annular metal cores 5, for example by being wound axially from the inside towards the outside around said cores which are usually known as bead wires and form the reinforcement of the beads, i.e. the radially innermost edges of said tyre, having the function of enabling the tyre to be fitted to its corresponding mounting rim.

The aforesaid carcass ply is strengthened with textile or metallic reinforcing cords which, in tyres with a radial carcass, lie in radial planes, i.e. in planes containing the rotation axis of the tyre.

A thick strip 6 of elastomeric material, i.e. the tread band, within which is formed a relief pattern for the contact with the road, capable of providing the aforesaid tyre with properties of traction, long life, quietness and regularity of wear, among other properties, is placed on the crown of said carcass.

It is specified that the term "elastomeric material" denotes the rubber mixture as a whole, in other words the assembly formed by at least one polymeric base suitably amalgamated with reinforcing fillers and/or process additives of various types.

In a known way, in tubeless tyres, the inner surface of the carcass is covered with a thin layer of airtight rubber (the "liner").

In tyres with a radial carcass, an annular reinforcing structure 7, usually known as a belt, which is circumferentially non-extensible and which comprises at least two radially superimposed strips 7a, 7b of rubberized fabric, which are provided with metallic reinforcing cords arranged to be parallel to each other in each strip and to cross over the cords in the adjacent strip, and preferably symmetrically arranged with respect to the equatorial plane of the tyre, is located between the carcass and the tread band; preferably, a third strip 7c of circumferentially orientated cords is also present, being placed in the radially outermost position and at least on the edges of the aforesaid underlying strips. This structure has, as is known, the specific purpose of opposing the forces acting in the tyre during use owing to the inflation pressure and the centrifugal force, and of providing the necessary handling properties, especially during cornering.

Tread band 6 can comprise a plurality of circumferential grooves intersecting, over the whole width of the strip or only partially, transverse grooves to provide a tread pattern having the desired behaviour features.

Device 2 according to the invention comprises a plurality of individual elements 8, without any chemical bound or mechanical restraint either with the tyre or with the rim, and free to move independently of each other within the annular cavity delimited by the tyre mounted on the rim.

In the present description, the term "device" does not indicate, as would be usual, an unitary structure consisting of a set of elements mechanically or kinematically connected to each other, contained within a clearly defined perimeter or volume; the term "device" is used here to indicate the predetermined quantity of said individual elements, of specified material, and having specified shapes and features, required to produce the effects of the invention (reduction of wheel noise) in a predetermined type of tyre, in accordance with its dimensions, features and type of application.

In other words, the device according to the invention is essentially a "package" comprising a certain number of said individual elements, regardless of whether the aforesaid package is prepared, distributed, marketed and/or used as such, or formed at the moment of use by taking the necessary quantity of individual elements from packs or other storage means containing a larger quantity of said individual elements.

Preferably, the device according to the invention will be made available on the market in single packs for the occasional user, i.e. the owner who intends to deaden his own vehicle, and in packs of large quantities for the regular user, in other words workshops, service stations, tyre repairers and all those who need to carry out frequent deadening operations on vehicles.

These elements are made from expanded materials or textile or mineral fibre materials. They are preferably made from open-cell expanded material, and more preferably from polymeric material, for example synthetic polymers or natural rubber polymers or mixtures of both.

Open-cell expanded materials are preferred because it has been found that the open cells not only provide a greater capacity for damping the acoustic waves (greater deadening capacity) than the closed cells of other expanded materials, but also decrease the rigidity of the material and increase its flexibility, thus imparting good properties of mechanical strength to it.

On this subject, the Applicant, when perceived the invention, initially used individual elements made from melamine, i.e. from a rather rigid expanded material.

When the wheel provided with said elements was taken off, after 5000 kilometres of use, the individual elements were no longer present; they had been transformed into a very fine powder, having a similar appearance, consistency and particle size to ash, having been destroyed by the repeated bending and compressive stresses undergone during the rotation of the wheel in use, in combination with the inflation pressure.

In a first embodiment, these individual elements consist of synthetic polymers, for example polythene, polystyrene, polyvinyl chloride, polyurethane, chloroprene and polyamide, or phenolic or urea resins.

Preferably, the chosen polymeric material has a modulus of compression in the range from 0.1 to 0.9 $N/mm^2$, and a resistance to tensile stress in the range from 0.2 to 1.1 $N/mm^2$.

The Applicant has found it convenient to use elements 8 having a real density in the range from 0.01 to 0.1 $g/cm^3$, where the real density for each element is determined by the following expression (relative to a specimen made from the material of said element having base dimensions of 100 mm by 100 mm and a height of 10 mm):

$$P/(Vo - Vv)$$

where P is the weight of the specimen, Vo is the total volume of the specimen and Vv is the volume of the voids.

In a further embodiment, said elements are made from mineral fibres, preferably rock wool, or textile fibres, preferably rayon.

In a further embodiment, elements 8 used in a single deadening device 2 may consist of a combination of different materials, chosen from those mentioned; they may also comprise elements differing from each other in shape, size and constituent material.

As mentioned above, aforesaid elements 8 may have different geometrical shapes and are provided with through holes 9.

Preferably they have a spheroidal or approximately spheroidal shape, as shown in Figure 1, or a parallelepipedal shape. Figure 2 shows deadening device 2 in a further preferred embodiment comprising parallelepipedal elements 8 having different dimensions from each other.

In this case (Figure 3a) the following dimensions are preferred: length L in the range from 1 to 15 cm, in particular about 3 cm, width 1 in the range from 1 to 6 cm, in particular about 2 cm, and thickness s in the range from 0.2 to 2 cm, in particular about 2 cm.

Figure 3b shows one of said elements 8 in a particular embodiment having approximately the shape of letter P with two lightening holes 9; the use of shapes reproducing the letters of the alphabet, both in the version with the same letters and in that with letters which are different from each other, provides advantageous features of damping and elasticity in the deadening layer owing to the marked non-uniformity of their shapes.

In Figures 1 and 2 a limited number of elements 8 is shown for the sake of simplicity, but in reality, according to the various possible applications, deadening device 2 is made by freely placing from 100 to 3000 elements in a random way inside the tyre. More particularly, in the case of car tyres, the number of said elements preferably varies from 100 to 700, while in the case of tyres for heavy duty vehicles said number preferably varies from 300 to 3000.

The total volume occupied by said elements 8 is preferably not less than 1% and not more than 90% of the total volume of the cavity delimited between the rim and the tyre.

As shown in Figure 2, tyre 1 is fitted to mounting rim 3 and inflated to its nominal operating pressure. The tyre wheel formed by rim 3 and corresponding tyre 1 is then fitted to the hub of the suspension of a vehicle (not illustrated).

During rolling, various elements 8 of deadening device 2 are pushed by the centrifugal force towards the surface of the liner, being superimposed on each other and being distributed in a wholly random way, thus creating an annular structure, interposed between the tyre and the rim, having a discontinuous and irregular (ragged) surface facing the rim surface; the configuration of this surface can also vary continuously with time, during the rolling of the tyre, as a result of the displacements with respect to each other which aforesaid elements 8 may undergo, according to their sizes, their number, the tyre speed and the impacts undergone, for example in passing through the footprint area.

Advantageously, device 2 according to the present invention allows to damp the acoustic waves of the stationary type which are generated inside the cavity formed between the rim and the tyre, thus eliminating the appearance of periodic phenomena with consequent peaks of resonance and in any case reducing the amplitudes of force, acceleration and noise level associated with the cavity frequencies.

The value of the first cavity frequency in the range of tyres currently used on wheels for vehicles is approximately in the range from 200 Hz to 300 Hz.

For a clearer understanding of the advantages obtained with the invention, the results of some comparative tests of two identical tyre wheels are given below, only one of said two identical tyre wheels comprising the deadening device according to the invention. The tyre was of the type marketed under the symbol P6000, of the 205/60 R15 class, having a first cavity frequency identified at approximately 235 Hz in static conditions.

The device according to the invention comprised elements of approximately parallelepipedal shape (with a length of 3 cm, a width of 2 cm and a thickness of 2 cm), numbering approximately 250, said elements occupying a volume equal to 2.5% of the volume of said annular cavity.

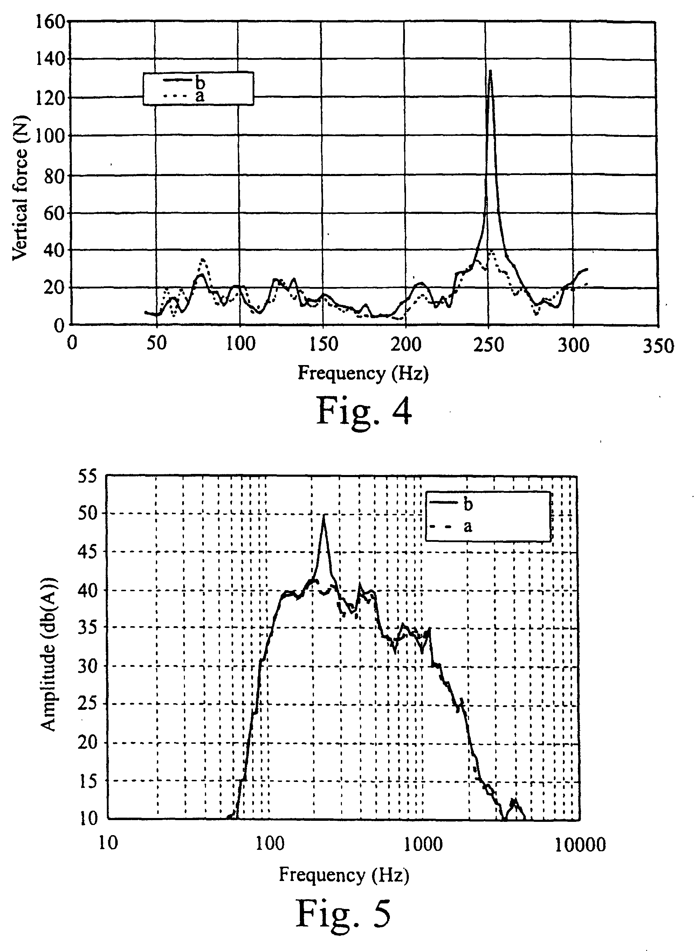

The results of the tests are shown in the diagrams in Figures 4 and 5, where the curves indicated by a and b relate, respectively, to a tyre provided with the deadening device according to the invention and to the same tyre without the device according to the invention.

In greater detail, Figure 4 shows, in the form of a diagram, the result of a comparison between the resultant forces at the hub of the wheel as a function of the frequency in the case of a tyre provided with the device according to the invention on the one hand, and in the case of the same tyre without this device on the other.

As is clearly shown in Figure 4, the deadening device according to the invention provides a considerable reduction of the vertical force, practically eliminating the peak at the first cavity frequency which, in dynamic conditions, is shifted to approximately 250 Hz. The device according to the invention reduces the aforesaid vertical force by at least 25% at said first cavity frequency.

Figure 5 shows, in the form of a diagram, the result of a comparison between the noise levels within the passenger compartment of a vehicle fitted with a tyre provided with the device according to the invention and in the same vehicle fitted with the same tyre without this device. The vertical axis shows the amplitude of the noise in decibels (dB(A)) inside the vehicle, and the horizontal axis shows the frequency of excitation due to the rolling of the tyre on the road.

As shown in Figure 5, the introduction of elements 8 causes a drastic reduction in the amplitude of the noise, eliminating in this case too the peak at the first cavity frequency, at approximately 250 Hz. The device according to the invention reduces the maximum amplitude of the acoustic waves by at least 25% at said first cavity frequency.

The device according to the invention provides further advantages.

In the first place, the material from which aforesaid elements 8 are made has a long-term resistance to wear in operating conditions without causing damage either to the liner of the tyre surface or to the surface of the rim.

It was also found that the presence of the aforesaid elements within the wheel did not adversely affect the rolling uniformity even at high speeds, and did not causes harmful unbalancing of forces either at the hub of the wheel or in the tyre footprint area.

Furthermore, the use of individual elements reproducing the letters of the alphabet, or alternatively other clearly identifiable shapes, provides a simple way of relating a particular embodiment of the device according to the invention to a specific tyre or class of tyres, or of customizing the device according to the preferences of the vehicle owner.

It is also clear from the above description that the invention relates in particular to tyres and wheels for motor cars, and to cars fitted with said wheels and said tyres. This is because the method and the device according to the invention, being specifically suitable for reducing noise in the passenger compartment of the vehicle, are most useful for cars, and less useful for heavy duty vehicles in whose passenger compartment the noise arising from the cavity frequencies of the tyres is less significant than other types of noise, both internal and external.

Finally, it should be understood that the present description is provided for the purpose of explanation and is not restrictive, and therefore all the modifications and variants not expressly described, but easily deducible from the present solution by a person skilled in the art, also fall within the scope of the present invention.

## Claims

1. Tyre wheel for vehicles, comprising:

   - a tyre (1) having a toroidal carcass structure including a central crown portion and two axially opposed sidewalls terminating in a pair of beads for fixing to a rim (3) of a wheel; - a mounting rim (3) for said tyre; - a deadening material, inserted into the annular cavity delimited between said tyre (1) and said rim (3) to reduce the internal noise of said vehicle due to the cavity frequencies of said tyre, said deadening material comprising a plurality of elements (8) having a marked non-uniformity of their shapes, providing said deadening material of damping and elasticity characteristics and being placed inside said cavity in the absence of restraints to said tyre (1) and to said rim (3), **characterized in that** each of said elements (8) has at least a through hole (9).

2. Tyre wheel according to Claim 1, **characterized in that** the number of said elements (8) is in the range from 100 to 3000.

3. Tyre wheel according to Claim 2, **characterized in that** said number is in the range from 300 to 700.

4. Tyre wheel according to Claim 1, **characterized in that** the volume occupied by said elements (8) is not less than 1% of the volume of said annular cavity.

5. Tyre wheel according to Claim 1, **characterized in that** said plurality of elements (8) reduces the amplitudes of acceleration and of the forces at the hub, as well as the noise levels inside said vehicle at a first cavity frequency in the range from 200 Hz to 300 Hz.

6. Deadening device (2) for damping the maximum amplitude of acoustic waves, said acoustic waves being generated within a tyre (1) during the rolling of the same, comprising a deadening material designed to be housed in the annular cavity formed between said tyre (1) and the corresponding mounting rim (3), comprising a plurality of independent elements (8) made from said deadening material, having a predetermined number, size and density, and having a marked non-uniformity of their shapes, providing said deadening material of damping and elasticity characteristics **characterized in that** each of said elements (8) has at least a through hole (9).

7. Deadening device according to Claim 6, **characterized in that** said deadening material is an open-cell expanded material.

8. Deadening device according to Claim 6, **characterized in that** said deadening material is a material of the polymeric type selected from the group comprising synthetic polymers, natural rubber polymers and mixtures of said polymers.

9. Deadening device according to Claim 8, **characterized in that** said synthetic polymers are selected from the group comprising polyethylene, polyurethane, polystyrene, chloroprene, polyamides, polyvinyl chlorides, phenolic resins and urea resins.

10. Deadening device according to Claim 6, **characterized in that** said deadening material comprises mineral and/or textile fibres.

11. Deadening device according to Claim 6, **characterized in that** said elements (8) have an approximately spherical shape.

12. Deadening device according to Claim 6, **characterized in that** said elements (8) have an approximately parallelepipedal shape.

13. Deadening device according to Claim 12, **characterized in that** said elements (8) have a length in the range from 1 cm to 15 cm, a width in the range from 1 cm to 6 cm, and a thickness in the range from 0.2 cm to 2 cm.

14. Deadening device according to Claim 6, **characterized in that** said elements (8) are approximately in the shape of a letter P.

15. Deadening device according to Claim 6, **characterized in that** said at least one through hole (9) has a diameter or a maximum dimension in the range from 0.4 cm to 3 cm.

**16.** Deadening device according to Claim 7, **characterized in that** said elements (8) have a real density in the range from 0.01 to 0.1 g/cm$^3$.

**17.** Deadening device according to Claim 7, **characterized in that** said elements (8) have an elastic impact resistance in the range from 20% to 50%.

**18.** Deadening device according to Claim 7, **characterized in that** said elements (8) have a modulus of compression in the range from 0.1 to 0.9 N/mm$^2$.

**19.** Deadening device according to Claim 7, **characterized in that** said elements (8) have a resistance to tensile stress in the range from 0.2 to 1.1 N/mm$^2$.

**20.** Deadening device according to Claim 6, **characterized in that** the number of said elements (8) is in the range from 100 to 700.

**21.** Deadening device according to Claim 6, **characterized in that** the number of said elements (8) is in the range from 300 to 3000.

**22.** Motor vehicle **characterized in that** it comprises at least one tyre wheel according to Claim 1.

## Revendications

**1.** Roue à pneu pour véhicules, comprenant :

- un pneu (1) ayant une structure de carcasse toroïdale comportant une partie de sommet centrale et deux flancs axialement opposés se terminant en une paire de talons pour la fixation sur une jante (3) d'une roue ;
- une jante (3) pour ledit pneu ;
- un matériau d'insonorisation, inséré dans la cavité annulaire délimitée entre ledit pneu (1) et ladite jante (3) pour réduire le bruit interne dudit véhicule dû aux fréquences de cavité dudit pneu, ledit matériau d'insonorisation comprenant une pluralité d'éléments (8) dont la forme présente une non uniformité marquée, qui donne audit matériau d'insonorisation des caractéristiques d'amortissement et d'élasticité, et qui sont placés à l'intérieur de ladite cavité en l'absence de sollicitation exercée sur ledit pneu (1) et ladite jante (3), **caractérisée en ce que** chacun desdits éléments (8) a au moins un trou débouchant (9).

**2.** Roue à pneu selon la revendication 1, **caractérisée en ce que** le nombre desdits éléments (8) est compris dans l'intervalle de 100 à 3 000.

**3.** Roue à pneu selon la revendication 2, **caractérisée en ce que** ledit nombre est compris dans l'intervalle de 300 à 700.

**4.** Roue à pneu selon la revendication 1, **caractérisée en ce que** le volume occupé par lesdits éléments (8) n'est pas inférieur à 1 % du volume de ladite cavité annulaire.

**5.** Roue à pneu selon la revendication 1, **caractérisée en ce que** ladite pluralité d'éléments (8) réduit les amplitudes de l'accélération et des forces dans le moyeu, ainsi que les niveaux de bruit à l'intérieur dudit véhicule à une première fréquence de cavité dans l'intervalle de 200 Hz à 300 Hz.

**6.** Dispositif d'insonorisation (2) pour amortir l'amplitude maximale d'ondes acoustiques, lesdites ondes acoustiques étant générées à l'intérieur d'un pneu (1) pendant le roulage de ce dernier, comprenant un matériau d'insonorisation conçu pour être logé dans la cavité annulaire formée entre ledit pneu (1) et la jante correspondante (3), comprenant une pluralité d'éléments indépendants (8) faits à partir dudit matériau d'insonorisation, ayant un nombre, une taille et une densité prédéterminés, et dont la forme présente une non uniformité marquée, qui donne audit matériau d'insonorisation des caractéristiques d'amortissement et d'élasticité, **caractérisé en ce que** chacun desdits éléments (8) a au moins un trou débouchant (9).

**7.** Dispositif d'insonorisation selon la revendication 6, **caractérisé en ce que** ledit matériau d'insonorisation est un matériau expansé à cellules ouvertes.

**8.** Dispositif d'insonorisation selon la revendication 6, **caractérisé en ce que** ledit matériau d'insonorisation est un matériau de type polymère choisi dans l'ensemble constitué par les polymères synthétiques, les polymères de type caoutchouc naturel et leurs mélanges.

**9.** Dispositif d'insonorisation selon la revendication 8, **caractérisé en ce que** lesdits polymères synthétiques sont choisis dans l'ensemble constitué par le polyéthylène, le polyuréthane, le polystyrène, le chloroprène, les polyamides, le poly(chlorure de vinyle), les résines phénoliques et les résines uréiques.

**10.** Dispositif d'insonorisation selon la revendication 6, **caractérisé en ce que** ledit matériau d'insonorisation comprend des fibres minérales et/ou textiles.

**11.** Dispositif d'insonorisation selon la revendication 6, **caractérisé en ce que** lesdits éléments (8) ont une forme à peu près sphérique.

**12.** Dispositif d'insonorisation selon la revendication 6, **caractérisé en ce que** lesdits éléments (8) ont une forme à peu près parallélépipédique.

**13.** Dispositif d'insonorisation selon la revendication 12, **caractérisé en ce que** lesdits éléments (8) ont une longueur comprise dans l'intervalle de 1 cm à 15 cm, une largeur comprise dans l'intervalle de 1 cm à 6 cm, et une épaisseur comprise dans l'intervalle de 0,2 cm à 2 cm.

**14.** Dispositif d'insonorisation selon la revendication 6, **caractérisé en ce que** lesdits éléments (8) ont à peu près la forme d'une lettre P.

**15.** Dispositif d'insonorisation selon la revendication 6, **caractérisé en ce que** ledit au moins un trou traversant (9) a un diamètre ou une dimension maximale compris(e) dans l'intervalle de 0,4 cm à 3 cm.

**16.** Dispositif d'insonorisation selon la revendication 7, **caractérisé en ce que** lesdits éléments (8) ont une masse volumique réelle comprise dans l'intervalle de 0,01 à 0,1 g/cm$^3$.

**17.** Dispositif d'insonorisation selon la revendication 7, **caractérisé en ce que** lesdits éléments (8) ont une résistance au choc élastique comprise dans l'intervalle de 20 % à 50 %.

**18.** Dispositif d'insonorisation selon la revendication 7, **caractérisé en ce que** lesdits éléments (8) ont un module de compression compris dans l'intervalle de 0,1 à 0,9 N/mm$^2$.

**19.** Dispositif d'insonorisation selon la revendication 7, **caractérisé en ce que** lesdits éléments (8) ont une résistance à la traction comprise dans l'intervalle de 0,2 à 1,1 N/mm$^2$.

**20.** Dispositif d'insonorisation selon la revendication 6, **caractérisé en ce que** le nombre desdits éléments (8) est compris dans l'intervalle de 100 à 700.

**21.** Dispositif d'insonorisation selon la revendication 6, **caractérisé en ce que** le nombre desdits éléments (8) est compris dans l'intervalle de 300 à 3 000.

**22.** Véhicule à moteur **caractérisé en ce qu'**il comprend au moins une roue à pneu selon la revendication 1.

**Patentansprüche**

**1.** Bereiftes Rad für Fahrzeuge

- mit einem Reifen (1) der einen toroidförmigen Karkassenaufbau mit einem zentralen Kronenabschnitt und zwei axial gegenüberliegenden Seitenwänden hat, die in einem Paar von Wulsten für eine Festlegung an einer Felge (3) eines Rads enden,
- mit einer Montagefelge (3) für den Reifen und
- mit einem Schalldämmmaterial, das in den ringförmigen Hohlraum eingelegt ist, der zwischen dem Reifen (1) und der Felge (3) begrenzt wird, um das Innengeräusch des Fahrzeugs aufgrund der Hohlraumfrequenzen des Reifens zu verringern,
- wobei das Schalldämmmaterial eine Vielzahl von Elementen (8) aufweist, die eine deutliche Ungleichförmigkeit ihrer Formen haben, die dem Schalldämmmaterial Dämpfungs- und Elastizitätseigenschaften geben und die innerhalb des Hohlraums bei Fehlen von Einschränkungen für den Reifen (1) und für die Felge (3) angeordnet sind, **dadurch gekennzeichnet,**
- **dass** jedes der Elemente (8) wenigstens ein Durchgangsloch (9) aufweist.

**2.** Bereiftes Rad nach Anspruch 1, **dadurch gekennzeichnet, dass** die Anzahl der Elemente (8) im Bereich von 100 bis 3000 liegt.

**3.** Bereiftes Rad nach Anspruch 2, **dadurch gekennzeichnet, dass** die Anzahl im Bereich von 300 bis 700 liegt.

**4.** Bereiftes Rad nach Anspruch 1, **dadurch gekennzeichnet, dass** das von den Elementen (8) eingenommene Volumen nicht kleiner als 1 % des Volumens des ringförmigen Hohlraums ist.

**5.** Bereiftes Rad nach Anspruch 1, **dadurch gekennzeichnet, dass** die Vielzahl von Elementen (8) die Amplituden der Beschleunigung und der Kräfte an der Nabe sowie die Geräuschpegel innerhalb des Fahrzeugs bei einer ersten Hohlraumfrequenz im Bereich von 200 Hz bis 300 Hz verringert.

**6.** Schalldämmvorrichtung (2) zum Dämpfen der maximalen Amplitude von Schallwellen, die in einem Reifen (1) während er abrollt erzeugt werden, wobei die Vorrichtung ein Schalldämmmaterial, das für die Aufnahme in dem zwischen dem Reifen (1) und der entsprechenden Montagefelge (3) ausgebildeten ringförmigen Hohlraum ausgelegt ist, und das eine Vielzahl von aus ihm hergestellten unabhängigen Elementen (8) mit vorgegebener Anzahl, Größe und Dichte sowie mit einer deutlichen Ungleichförmigkeit ihrer Formen aufweist, die dem Schalldämmmaterial Dämpfungs- und Elastizitätseigenschaften geben, **dadurch gekennzeichnet, dass** jedes der Elemente (8) wenigstens ein Durchgangsloch (9) hat.

**7.** Schalldämmvorrichtung nach Anspruch 6, **dadurch gekennzeichnet, dass** das Schalldämmmaterial ein offenzelliges geschäumtes Material ist.

**8.** Schalldämmvorrichtung nach Anspruch 6, **dadurch gekennzeichnet, dass** das Schalldämmmaterial ein polymeres Material ist, das aus der Gruppe ausgewählt ist, die synthetische Polymere, Naturkautschukpolymere und Mischungen dieser Polymere aufweist.

**9.** Schalldämmvorrichtung nach Anspruch 8, **dadurch gekennzeichnet, dass** die synthetischen Polymere aus der Gruppe ausgewählt sind, die Polyethylen, Polyurethan, Polystyrol, Chloropren, Polyamide, Polyvinylchloride, Polyphenolharze und Harnstoffharze aufweist.

**10.** Schalldämmvorrichtung nach Anspruch 6, **dadurch gekennzeichnet, dass** das Schalldämmmaterial Mineral- und/oder Textilfasern aufweist.

**11.** Schalldämmvorrichtung nach Anspruch 6, **dadurch gekennzeichnet, dass** die Elemente (8) eine annähernd kugelige Form haben.

**12.** Schalldämmvorrichtung nach Anspruch 6, **dadurch gekennzeichnet, dass** die Elemente (8) annähernd eine Quaderform haben.

**13.** Schalldämmvorrichtung nach Anspruch 12, **dadurch gekennzeichnet, dass** die Elemente (8) eine Länge im Bereich von 1 cm bis 15 cm, eine Breite im Bereich von 1 cm bis 6 cm und eine Dicke im Bereich von 0,2 cm bis 2 cm haben.

**14.** Schalldämmvorrichtung nach Anspruch 6, **dadurch gekennzeichnet, dass** die Elemente (8) in etwa die Form des Buchstabens P haben.

**15.** Schalldämmvorrichtung nach Anspruch 6, **dadurch gekennzeichnet, dass** das wenigstens ein Durchgangsloch (9) einen Durchmesser oder eine maximale Abmessung im Bereich von 0,4 cm bis 3 cm hat.

**16.** Schalldämmvorrichtung nach Anspruch 7, **dadurch gekennzeichnet, dass** die Elemente (8) eine echte Dichte im Bereich von 0,01 bis 0,1 g/cm$^3$ haben.

**17.** Schalldämmvorrichtung nach Anspruch 7, **dadurch gekennzeichnet, dass** die Elemente (8) einen elastischen Stoßwiderstand im Bereich von 20 % bis 50 % haben.

**18.** Schalldämmvorrichtung nach Anspruch 7, **dadurch gekennzeichnet, dass** die Elemente (8) einen Kompressionsmodul im Bereich von 0,1 bis 0,9 N/ mm$^2$ haben.

**19.** Schalldämmvorrichtung nach Anspruch 7, **dadurch gekennzeichnet, dass** die Elemente (8) einen Widerstand für Zugspannung im Bereich von 0,2 bis 1,1 N/mm$^2$ haben.

**20.** Schalldämmvorrichtung nach Anspruch 6, **dadurch gekennzeichnet, dass** die Anzahl der Elemente (8) im Bereich von 100 bis 700 liegt.

**21.** Schalldämmvorrichtung nach Anspruch 6, **dadurch gekennzeichnet, dass** die Anzahl der Elemente (8) im Bereich von 300 bis 3000 liegt.

**22.** Kraftfahrzeug, **dadurch gekennzeichnet, dass** es wenigstens ein bereiftes Rad nach Anspruch 1 aufweist.

Fig. 1

Fig. 2

Fig. 3a

Fig. 3b

Fig. 4

Fig. 5